(19) Europäisches Patentamt
European Patent Office
Office européen des brevets

(11) **EP 3 376 650 A1**

(12) **EUROPEAN PATENT APPLICATION**

(43) Date of publication:
**19.09.2018 Bulletin 2018/38**

(51) Int Cl.:
**H02K 21/46** (2006.01)          **H02K 21/04** (2006.01)
**H02P 9/40** (2006.01)           **H02K 1/27** (2006.01)

(21) Application number: **18161018.9**

(22) Date of filing: **09.03.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.03.2017 US 201715456710**

(71) Applicant: **Hamilton Sundstrand Corporation Charlotte, NC 28217-4578 (US)**

(72) Inventors:
• **GIERAS, Jacek F.**
  **Glastonbury, CT Connecticut 06033 (US)**
• **ROZMAN, Gregory I.**
  **Rockford, IL Illinois 61114 (US)**

(74) Representative: **Dehns**
**St. Brides House**
**10 Salisbury Square**
**London EC4Y 8JD (GB)**

(54) **PERMANENT MAGNET STARTER-GENERATOR WITH MAGNETIC FLUX REGULATION**

(57)     Embodiments herein relate to a permanent magnet (PM) dynamoelectric machine (100). The machine includes a drive shaft, a stator assembly (20) having a ferromagnetic stator core (21), a plurality of stator teeth (23) mounted to the stator core (21) with distal ends proximate the inner radial periphery of the stator assembly and a plurality of stator coils mounted between the stator teeth (23), and a PM rotor assembly (30) with multiple PMs, a ferromagnetic rotor core (31), a plurality of ferromagnetic rotor teeth (33) mounted to the rotor core (31) with distal ends proximate an inner periphery of the stator assembly separated by an air gap, and at least one control coil, the at least one control coil wrapped about a saturable region of each the rotor teeth (33). Each saturable region of the rotor teeth is operable to divert air gap magnetic flux ($\Phi$g) generated by the PMs across the air gap through the distal ends of the rotor teeth (33).

FIG. 2

**Description**

TECHNICAL FIELD

The invention relates to permanent magnet (PM) dynamoelectric machines, and more particularly to PM dynamoelectric machines with variable magnetic flux excitation.

BACKGROUND

Permanent magnet (PM) brushless dynamoelectric machines have the highest power density in comparison with all other classical electrical machines. They also have very high efficiency and good dynamic performance. On the other hand, PM brushless machines exhibit constant magnetic flux which, conventionally mandates use of an external solid state converter to maintain control. As a result, these constant magnetic flux requirements may limit utilization of PM brushless machines as generators when the prime mover speed is variable, e.g., aircraft generators. In addition, the constant magnetic flux also limits their utilization as variable-speed motors for selected applications, e.g., electric or hybrid-electric vehicle.

Control of magnetic excitation flux is not available in standard PM brushless dynamoelectric machines. Such control has previously only been practical with current vector control techniques. In vector control, a motor controller operates as an inverter system to inject the direct axis (d-axis) current that weakens the PM flux to a desired degree. However, such d-axis current injection to control magnetic flux excitation has certain drawbacks, such as a significant increase in stator winding losses that can result in excess heat dissipated in the stator winding and irreversible demagnetization of low energy density rotor PMs, such as rotor PMs of the ferrite type.

Electric starter generators are used for starting turbine engines and for generating electricity after starting the engine. They have found broad applications in aerospace, land and sea vehicles. A permanent magnet (PM) synchronous motor is not a self-starting motor. Common methods of starting include frequency-change starting using a variable-voltage variable-frequency (VVVF) solid state inverter and asynchronous starting, i.e., the PM rotor is equipped with a rotor cage winding (line start motor). When speed control is not required, a rotor winding is more cost-effective solution to starting, because the solid state converter is not necessary. However, line-start motors rated at about 10 kW and above, may draw unacceptable high inrush current exceeding several times the rated current.

Standard PM generators have no capability of controlling the output voltage. Such a PM machine is capable of much higher angular velocity than a wound field synchronous machine (WFSM) of similar output and, therefore, is capable of direct coupling to the prime mover, thereby potentially eliminating the reduction gearbox typically employed. This results in reduced weight, cost, and complexity of an electrical power generation system. However, traditional PM machines have no convenient means to alter magnetic flux for regulating their output. Therefore, it would be advantageous to have a convenient means to start the PM synchronous motor and yet be able to modify and regulate magnetic flux in a PM dynamo electric machine.

BRIEF DESCRIPTION

According to one embodiment of the invention, described herein is a permanent magnet (PM) dynamoelectric machine. The machine includes a drive shaft, a stator assembly having a ferromagnetic stator core, a plurality stator teeth mounted to the stator core with distal ends proximate the inner radial periphery of the stator assembly and a plurality of stator coils mounted between the stator teeth, and a PM rotor assembly with multiple PMs, a ferromagnetic rotor core, a plurality of ferromagnetic rotor teeth mounted to the rotor core with distal ends proximate an inner periphery of the stator assembly separated by an air gap, and at least one control coil, the at least one control coil wrapped about a saturable region of each the rotor teeth. Each saturable region of the rotor teeth is operable to divert air gap magnetic flux ($\Phi_g$) generated by the PMs across the air gap through the distal ends of the rotor teeth.

In addition to one or more of the features described above, or as an alternative, further embodiments may include that application of a control current $I_c$ to the control coil at least partially magnetically saturates the saturable region the rotor teeth to reduce shunting of air gap magnetic flux $\Phi g$, thereby controlling magnetic flux linkage $\Psi_M$ between the PMs and the plurality of stator coils.

In addition to one or more of the features described above, or as an alternative, further embodiments may include that application of a control current $I_c$ to the control coil at least partially magnetically saturates the saturable region for the plurality of rotor teeth to reduce shunting of air gap magnetic flux $\Phi g$, thereby at least one of increasing generated electromagnetic force (EMF) and increasing electromagnetic torque $T_e$ to desired levels upon application of electrical power to the stator coils at lower levels of rotor assembly angular velocity.

In addition to one or more of the features described above, or as an alternative, further embodiments may include a rotary transformer having a stationary primary and a rotating secondary, the primary operably coupled to a controller for controlling connection and application of an excitation to the primary of the rotary transformer, the secondary operably connected to the control winding of the rotor.

In addition to one or more of the features described above, or as an alternative, further embodiments may include that the primary of the rotary transformer is disconnected during motoring operation of the machine.

In addition to one or more of the features described above, or as an alternative, further embodiments may include that the stator assembly comprises at least one of a laminated ferromagnetic alloy construction and a ferromagnetic stamping.

In addition to one or more of the features described above, or as an alternative, further embodiments may include that the rotor assembly comprises at least one of a laminated ferromagnetic alloy construction, a sintered magnetic powder construction, a solid steel structure, and a ferromagnetic stamping.

In addition to one or more of the features described above, or as an alternative, further embodiments may include that the PMs are embedded in the rotor assembly radially distant from the plurality of rotor teeth.

In addition to one or more of the features described above, or as an alternative, further embodiments may include that the PMs are arranged in a radial direction and magnetized tangentially.

. In addition to one or more of the features described above, or as an alternative, further embodiments may include that the PMs are arranged in a circumferentially and magnetized radially.

In addition to one or more of the features described above, or as an alternative, further embodiments may include that the PMs are arranged with ferromagnetic material of the rotor assembly forming magnetic poles in the ferromagnetic material.

In addition to one or more of the features described above, or as an alternative, further embodiments may include that each saturable region of the inner stator assembly exhibits high reluctance when saturated limiting magnetic flux linkage from the PMs.

In addition to one or more of the features described above, or as an alternative, further embodiments may include that the control coils connect to each other in series.

In addition to one or more of the features described above, or as an alternative, further embodiments may include that the control current $I_c$ is an alternating current (AC).

In addition to one or more of the features described above, or as an alternative, further embodiments may include that adjacent windings of the control coils attach to each other to shunt magnetic fluxes from the PMs in opposition.

In addition to one or more of the features described above, or as an alternative, further embodiments may include that the machine is configured and operable as at least one of a PM generator and a PM motor.

Also described herein in an embodiment is a permanent magnet (PM) electric generator system with directly controllable field excitation control The PM electric generator system including a prime mover, a main PM generator coupled to the prime mover that includes a first stator assembly comprising a ferromagnetic stator core, a plurality ferromagnetic stator teeth mounted to the stator core with distal ends proximate the inner radial periphery of the stator assembly and a plurality of stator coils mounted between the stator teeth of the plurality of stator teeth, a PM rotor assembly with multiple PMs, a ferromagnetic rotor core, a plurality of ferromagnetic rotor teeth mounted to the rotor core with distal ends forming an outer periphery proximate an inner periphery of the stator assembly separated by an air gap, and at least one control coil, the at least one control coil wrapped about a saturable region of each the rotor teeth, where each saturable region of the rotor teeth is operable to divert air gap magnetic flux ($\Phi_g$) generated by the PMs across the air gap through the distal ends of the rotor teeth. The system also includes a main power rectifier system for converting multiphase alternating current (AC) that the main PM stator coils generate to direct current (DC) main power on a DC power bus that feeds a DC load and an auxiliary power source;

In addition to one or more of the features described above, or as an alternative, further embodiments may include that the auxiliary power source comprises a multiphase AC auxiliary PM generator driven by the prime mover and a multiphase AC rectifier that converts AC power generated by the auxiliary PM generator to DC power.

In addition to one or more of the features described above, or as an alternative, further embodiments may include a pulse width modulator (PWM) circuit that receives the control current regulating signal and generates corresponding PWM control signals.

Additional features and advantages are realized through the techniques of the present disclosure. Other embodiments and aspects of the disclosure are described in detail herein. For a better understanding of the disclosure with the advantages and the features, refer to the description and to the drawings.

BRIEF DESCRIPTION OF THE DRAWINGS

The subject matter which is regarded as the invention is particularly pointed out and distinctly claimed in the claims at the conclusion of the specification. The foregoing and other features, and advantages of the invention are apparent from the following detailed description taken in conjunction with the accompanying drawings in which:

FIG. 1A depicts a simplified example of a magnetic flux diverter concept as employed in the embodiments;

FIG. 1B depicts a variation in relative magnetic permeability with the control current as employed in the embodiments;

FIG. 2 is a partial cross sectional view of a permanent magnet (PM) dynamo electric machine according to one embodiment;

FIG. 3 is a partial cross section of the rotor of the PM machine with in accordance with an embodiment;

FIG. 4 is a simplified schematic representation of the rotor coils and rotary transformer in accordance with an embodiment;

FIG. 5 depicts a winding arrangement for the rotor coils in accordance with an embodiment;

FIG. 6A is a partial cross section of the rotor of the PM machine depicting magnetic flux lines without a control current applied to the rotor windings, according to an embodiment;

FIG. 6B is a partial cross section of the rotor of the PM machine depicting magnetic flux with a control current applied to the rotor windings saturating the rotor core, according to an embodiment;

FIG. 7 is a high-level schematic representation of an electrical power generating system according to a possible embodiment; and

FIG. 8 is a flowchart of the method of controlling the flux in a PM dynamo electric machine in accordance with an embodiment.

DETAILED DESCRIPTION

For the purposes of promoting an understanding of the principles of the present disclosure, reference will now be made to the embodiments illustrated in the drawings, and specific language will be used to describe the same. It will nevertheless be understood that no limitation of the scope of this disclosure is thereby intended. The following description is merely illustrative in nature and is not intended to limit the present disclosure, its application or uses. It should be understood that throughout the drawings, corresponding reference numerals indicate like or corresponding parts and features. As used herein, the term controller refers to processing circuitry that may include an application specific integrated circuit (ASIC), an electronic circuit, an electronic processor (shared, dedicated, or group) and memory that executes one or more software or firmware programs, a combinational logic circuit, and/or other suitable interfaces and components that provide the described functionality.

Additionally, the term "exemplary" is used herein to mean "serving as an example, instance or illustration." Any embodiment or design described herein as "exemplary" is not necessarily to be construed as preferred or advantageous over other embodiments or designs. The terms "at least one" and "one or more" are understood to include any integer number greater than or equal to one, i.e. one, two, three, four, etc. The terms "a plurality" are understood to include any integer number greater than or equal to two, i.e. two, three, four, five, etc. The term "connection" can include an indirect "connection" and a direct "connection".

As shown and described herein, various features of the disclosure will be presented. Various embodiments may have the same or similar features and thus the same or similar features may be labeled with the same reference numeral, but preceded by a different first number indicating the figure to which the feature is shown. Thus, for example, element "a" that is shown in Figure X may be labeled "Xa" and a similar feature in Figure Z may be labeled "Za." Although similar reference numbers may be used in a generic sense, various embodiments will be described and various features may include changes, alterations, modifications, etc. as will be appreciated by those of skill in the art, whether explicitly described or otherwise would be appreciated by those of skill in the art.

In general, embodiments herein relate generally to a permanent magnet (PM) electric dynamoelectric machine with directly controllable field excitation. Using a magnetic flux diverter, the magnetic flux of the permanent magnets can be controlled and regulated. Conventional magnetic flux diverters may employ shunts or a second stator coil to manipulate and control the magnetic flux of the permanent magnets. In an embodiment, an approach is described that facilitates controlling the magnetic flux of the permanent magnets in a dynamoelectric machine. In an embodiment, flux regulation and, consequently, regulation of the output voltage can be achieved by placing an additional winding in the rotor or stator. In this instance, for the embodiments described herein a PM brushless starter-generator with additional winding in the rotor. This winding, together with a rotary transformer is used both for self-starting and control of the flux of the permanent magnet to control and maintain the output voltage of the generator.

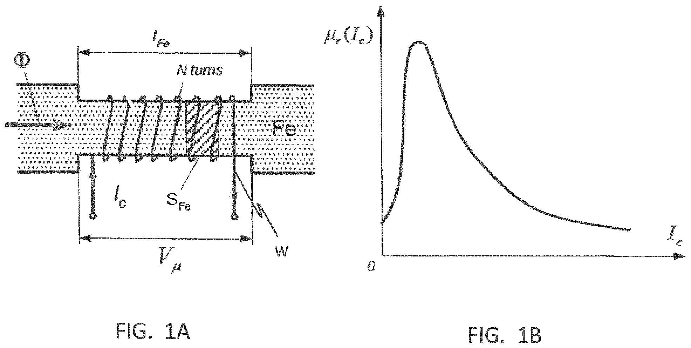

FIG. 1A depicts a simplified example of a magnetic circuit to illustrate the concept of a magnetic flux diverter as employed in the embodiments described herein. The magnetic flux diverter can be understood as a conventional electromagnetic device that includes a saturable ferromagnetic material or core denoted by the symbol "Fe" (or a portion thereof) with a winding or coil of N turns wrapped around it. As a current (called a control current $I_c$) is passed through the winding, the magnetic properties of the ferromagnetic material or core will vary to the point of saturation. To appreciate the operation of the magnetic flux diverter, discussion of the theory will be of assistance. The magnetic flux ($\Phi$) is inversely proportional to the reluctance R of the ferromagnetic core, where:

$$\Phi = \frac{V_\mu}{\Re} = V_\mu \frac{\mu_0 \mu_r (I_c) S_{Fe}}{l_{Fe}} \qquad (1)$$

where $V_\mu$ is the magnetic voltage drop, $\mu_0 = 0.4\pi \times 10^{-6}$ H/m is the magnetic permeability of free space, $\mu_r(I_c)$ is the relative magnetic permeability of the magnetic flux diverter for the diverter material dependent on the control current $I_c$, $S_{Fe}$ is the cross section area of the flux diverter and $l_{Fe}$ is the length of the flux diverter. The relative magnetic permeability $\mu_r$ is a function of the magnetic flux intensity. Further, it will be understood that magnetic field intensity is proportional to the current $I_c$ in the winding 34. Thus, the relative magnetic permeability $\mu_r$ varies with the current $I_c$. This phenomenon is depicted in the graph of FIG 1B. It is understood that the magnetic flux $\Phi$ is related to the relative magnetic permeability $\mu_r$ which in turn is related to the control current $I_c$. Therefore, as the $I_c$ increases, the permeability decreases and the reluctance for magnetic flux also increases. This characteristic of the magnetic diverter and the controllable saturation facilitates control of the magnetic flux in the described embodiments.

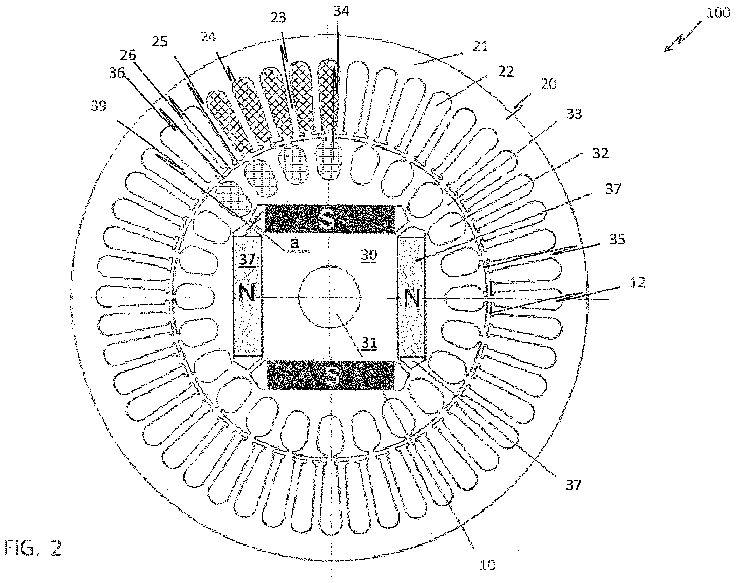

FIG. 2 is a partial axial cross sectional view of a permanent magnet (PM) dynamoelectric machine 100 according to one possible embodiment. The PM machine 100 includes a standard stator 20 with a stator core 21 and with slots 22 and three-phase (or polyphase) armature winding (power winding) 24 wound in the stator slots 22. The PM machine 100 also includes a rotor assembly 30 disposed on a central shaft 10 coupled to bearings that has PMs 37 embedded in the rotor core 31 and winding 34 distributed in slots 32 of the rotor core 31. PMs 37 produce the excitation flux. The rotor winding 34 to produces the starting torque (motoring mode) and facilitates control the rotor excitation flux (generating mode). A narrow bridge 39 having width "a" is utilized to limit the leakage magnetic flux between neighboring magnets. Under the action of PM field, the bridge is highly saturated and behaves as a nonferromagnetic material.

A multiple pole outer stator assembly shown generally as 20, typically of the multiphase alternating current (AC) type, circumscribes the rotor assembly 30. The stator assembly 20 has multiple ferromagnetic stator teeth 23 coupled to a ferromagnetic stator core 21, and arranged around the periphery of the stator core 21, one stator tooth 23 for each of the slots of the stator assembly 20. A distal end 25 of each stator tooth 23 forming an inner periphery 26 of the stator assembly 20 is proximate the outer annular periphery 36 of the rotor assembly 30. In one embodiment, a small outer air gap 12 exists between the outer annular periphery 36 of the rotor assembly 30 and the stator teeth 21 of the stator assembly 20. The stator assembly 20 also has multiple stator coils 24 mounted in the slots 22 between the stator teeth 23. In an embodiment, the ferromagnetic stator core 21 and stator teeth 23 may be constructed of any variety of ferromagnetic materials including, but not limited to steel laminations, sintered magnetic powder material, or solid ferromagnetic material such a steel. In one embodiment steel laminations are employed. The stator winding 24, also called an armature winding, is typically a three-phase winding. However, it should be understood that any number of phases can be designed. The minimum number of phases is one.

The PM rotor assembly 30 comprises multiple PMs 37 arranged and mounted thereon. By way of example only, FIG. 2 shows the PM rotor assembly 30 with four PMs 37. PMs 37 are embedded in the rotor core 31 and are magnetized in the radial direction. That is, in an embodiment, the PMs 37 are trapezoidal or rectangular in shape, having two longer sides perpendicular to the direction of magnetization Radial arrangement of PMs 37, e.g. spoke magnets magnetized in circumferential direction is also possible. In addition, the polarity of PMs, 37 i.e., magnetization vector, is in radial (e.g. in the radial direction) The polarity of PMs 37 is shown in FIG. 2. There is a ferromagnetic material (rotor core 31) between the PMs 37 and the outer periphery 36 of the rotor assembly 30. Magnetic poles are created in the ferromagnetic material radially outward of the PMs 37. In FIG. 2 the rotor assembly 30 depicted has four poles created by embedded PMs 37. PMs 37 can be also arranged at greater angle than zero degrees with respect the rotor radius or can have different cross section than rectangular. The number of PMs 37 is typically even to create pole pairs. The minimum number of PMs 37 is two and the maximum number depends on the room available and the size of the PMs 37 employed. For those skilled in electrical machines it is obvious that any even number of poles can be used. Also, PMs 37 can be arranged radially (spoke magnets), embedded in V-shaped axial slots as described herein, or other shapes and magnetizations of PMs 37 may be used.

The rotor assembly 30 also includes multiple ferromagnetic teeth 33 coupled to the ferromagnetic rotor core 31, and arranged around the outer periphery 36 of the rotor core 31. Six rotor teeth 33 for each of the poles of the rotor assembly 30 are depicted. However, the number of rotor teeth per each of the poles is only practically limited only by the space available above PMs 37and saturation of the rotor teeth 33. A distal end 35 of each rotor tooth 33 forming the outer periphery 36 of the rotor assembly 30 is proximate the inner annular periphery 26 of the stator assembly 20. A small air gap 12 exists between the outer annular periphery 36 of the rotor assembly 30 and the inner periphery 26 of the stator assembly 20.

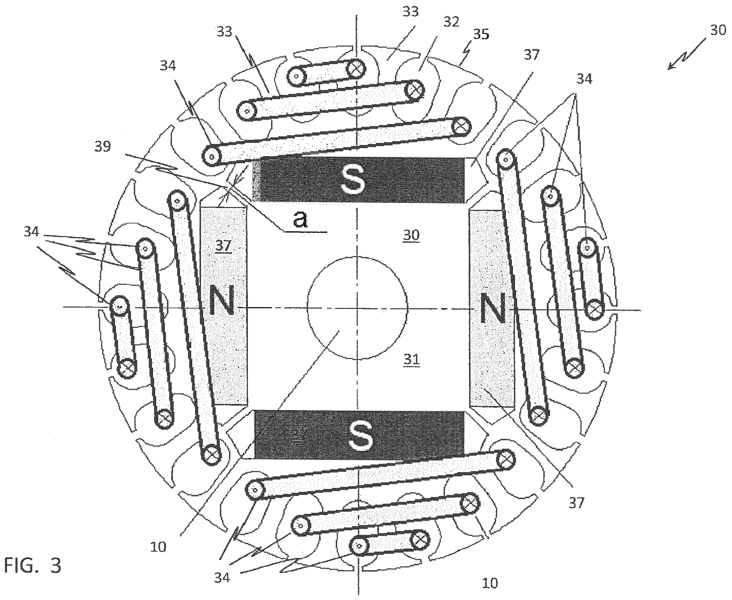

The rotor assembly 30 includes a rotor coil or winding 34. In an embodiment the rotor winding 34 is configured with three coils per pole, that is, for each pole of the PMs 37, there are three coils in the rotor winding 34. FIG. 3 depicts a partial cut away view of the machine 100 with the rotor winding 34. Any number of rotor winding 34 per pole greater than or equal to 1 may be used. The rotor windings 34 are mounted in the slots 32 between the rotor teeth 33. In an embodiment, the ferromagnetic rotor core 31 and rotor teeth 33 may be constructed of any variety of ferromagnetic materials including, but not limited to steel laminations, sintered magnetic powder material, or solid ferromagnetic material such a steel. In one embodiment steel laminations are employed. The rotor winding 34, also called a start winding or control winding, is typically a single-phase or DC winding. However, it should be understood that any number of phases can be designed. The minimum number of phases is one.

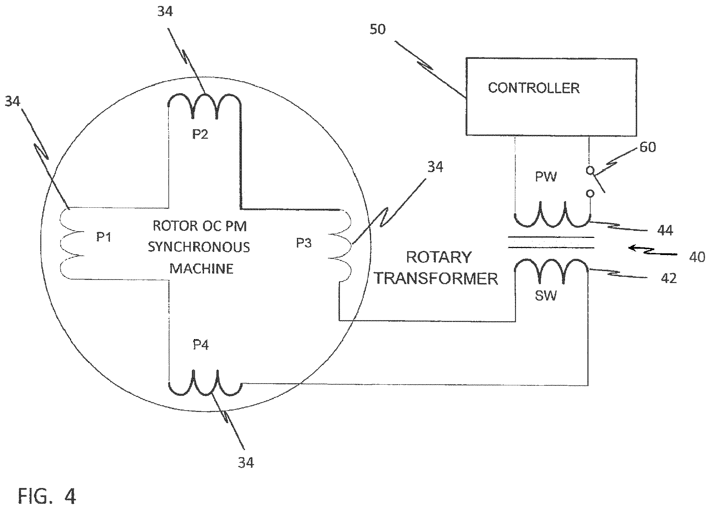

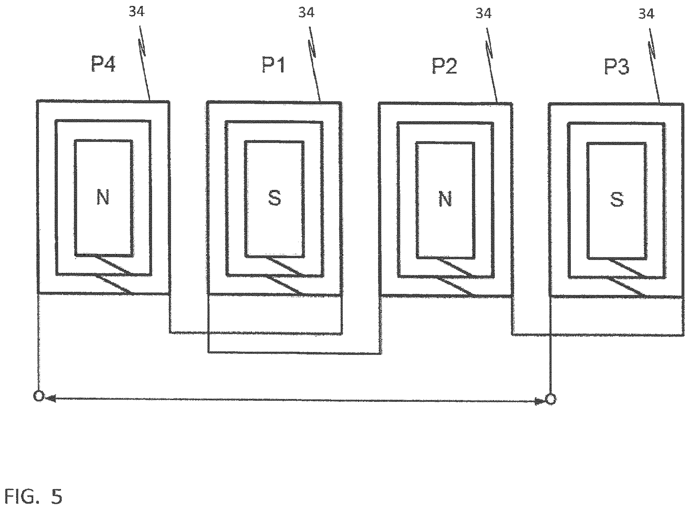

Turning now to FIG. 4 as well, the interconnection of the rotor coils and a rotary transformer 40 are depicted. The four rotor coils 34 of four-pole rotor assembly 30 can be series connected, parallel-connected or series-parallel-connected. In an embodiment, as depicted in FIGs. 3 and 4, a series connection for the rotor winding(s) 34 is employed. The series connected rotor windings 34 are connected to the secondary winding 42 of the rotary transformer 40. The fixed primary winding 44 (labeled PW) of the rotary transformer 40 is connected to the controller 50. In an embodiment, the primary winding 44 is connected via a switch 60. In an embodiment the switch 60 may be electromechanical device such as a relay. In another embodiment, the electromechanical switch 60 can be replaced with a solid state switch, e.g., a MOSFET. FIG. 5 depicts a winding arrangement for the rotor winding 34 in accordance with an embodiment.

The hereinbefore-identified components describe a PM dynamoelectric machine 100 as may be employed in the embodiments. To better appreciate the application of the flux diversion techniques to the described embodiments, discussion of the operation of a PM dynamoelectric machine 100 as a motor and generator is provided. In operation as an electric motor, a motor drive (not shown, or part of controller 50) supplies controlled multiphase electrical power to the stator winding 24. Once started, the rotating field in the stator coils 24 causes the rotor assembly 30 to rotate in synchronization and thereby rotate the drive shaft 10 (FIG. 3). Fixed excitation flux provided by the PMs 37 in the rotor assembly 30 limits the use of the machine 100. In a PM synchronous motor drive the electrical current and voltage are limited by the constraints of the motor drive and constraints of the motor windings. For the configuration of the dynamoelectric machine 100 of an embodiment the electromagnetic torque $T_e$ that can be generated is simply approximated as the product of the magnetic flux linkage $\Psi_M$ and the q-axis armature current $I_{aq}$, in the stator windings 24 as follows.

$$T_e = \frac{3}{2} p \Psi_M I_{aq} \qquad (2)$$

where p is the number of pole pairs in the stator assembly 20.

Thus it can be seen that the torque capabilities of the dynamoelectric machine 100 may readily be controlled by controlling the magnetic flux linkage $\Psi_M$ and the q-axis armature current $I_{aq}$.

In operation as an electric generator, a prime mover (not shown) coupled to the drive shaft 10 rotates the PM rotor assembly 30. With a magnetic flux linkage ($\Psi_M$) between the PMs 37 and the stator windings 24 of the stator assembly 20, the rotating magnetic field that the rotating PMs 37 generate causes magnetic excitation flux to flow through the stator winding 24, thereby generating multiphase electrical power in the stator winding 24. Fixed excitation flux provided by the PMs 37 in the rotor assembly 30 limits the use of the machine 100, since electromotive force (EMF) that the machine 100 generates is proportional to the rate of change of magnetic flux passing through the stator winding 20 and this rate of change is proportional to the angular velocity of the rotor assembly 30. Thus, for any variation in angular velocity of the prime mover, the EMF of the machine will vary as well limiting the generation capability of the machine 100.

Continuing with FIG. 4, in an embodiment, to address the concerns above, when the PM machine 100 is initially energized, the PM machine 100 is operated as a starter. Since a PM synchronous motor is not a self-starting motor, the rotor winding 34 is employed to produce an asynchronous starting torque to ensure the PM machine 100 starts rotating. In this instance, the switch 60 is open, the series connection of rotor windings 34 is closed by the secondary winding 42 of the rotary transformer 40. The secondary winding 42 of the rotary transformer operates as an inductor. At the first instant of starting, when the rotor speed is zero (i.e., n = 0), the back EMF equals zero and the frequency of the current in the rotor winding 34 is high, i.e., equal to the frequency of the stator current in the stator winding 24. The reactance of the inductor formed by the secondary winding 42 of the rotary transformer 40 is configured to also be high for the excitation frequency. This high reactance of the secondary winding 42 prevents excessive current forming in the rotor winding 34 at a back EMF equal to zero. Since the machine starts as an asynchronous motor, the current in the stator winding 24 is proportional to the current in the rotor winding 34. An asynchronous torque is created as a result of interaction between the current in the rotor winding 34 and rotating magnetic field produced by the current applied to the stator winding 24. As the rotor assembly 30 begins to rotate, and the speed increases (i.e., n > 0), the rotor frequency decreases and the reactance of the inductor (formed by the secondary winding 42 of the rotary transformer 40) also decreases and the back EMF increases. At the rotor speed n close to the synchronous speed ns (speed of the rotating field in the stator winding 24, the frequency in the rotor windings 34 approaches zero and the inductance from the secondary winding 42 of the rotary transformer 40 becomes negligible. However, advantageously, at this point, with the motor near synchronous speed, the back EMF is at its maximum value and prevents excessive currents in the stator winding 24 and rotor winding 34. Thus, advantageously, the reactance in the rotor winding circuitry is adjusted with the rotor speed and keeps the stator winding 24 current and rotor winding 34 current at the desired level. Finally, the rotor is pulled into synchronism when its speed (i.e., rotor speed is approximately equal to the synchronous speed, $n \cong ns$), the frequency of current in the rotor winding approaches zero, so the rotor winding does not participate in the production of the electromagnetic torque. The current in the rotor winding 34 is zero, because the PMs 37 produce the synchronous torque.

In another embodiment, the PM machine 100 is operated as a generator. In electric generators, the speed usually is variable (acceleration, deceleration, cruising) depending on the operation of a prime mover driving the shaft 10 of the PM machine 100. To maintain a constant output voltage from the stator windings 24, the magnetic flux of the PMs 37 in the rotor 30 coupling to the stator winding 24 must be controlled. In this embodiment control of the magnetic flux and coupling is facilitated by the rotating transformer 40 and the controller 50 operating as a flux diverter as described earlier. In an embodiment, when the switch 60 is closed, the controller 50 generates a variable voltage and variable frequency excitation applied to the primary winding 44 of the rotary transformer 40. The excitation of the controller 50 is transformed to the secondary winding 42 of the rotary transformer 40 and feeds the rotor winding 34. The rotor winding 34 produces additional magnetic flux. This flux modulates the magnetic flux of PMs 37. If the speed of the drive to the PM machine 100 decreases, the magnetic flux is increased to maintain the output voltage of the PM machine 100 constant. If the speed of the prime mover driving the PM machine 100 increases, the magnetic flux is reduced to maintain the output voltage of the generator constant.

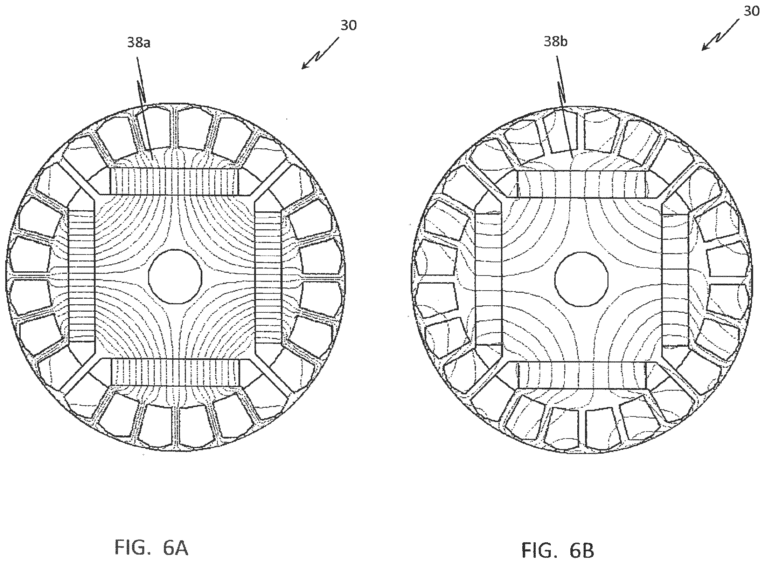

FIGSs. 6A and 6B depict a partial cross section of the rotor assembly 30 of the PM machine 100 depicting the magnetic flux lines in the rotor core 32 with magnetic flux regulation according to an embodiment. FIG. 6a depicts the magnetic flux lines when the control current supplied to the rotor winding 34 is zero. While FIG. 6B depicts the magnetic flux lines when the control current supplied to the rotor winding 34 is about 5 amperes and the rotor core 32 is saturated.

In FIG. 6A. when the control current $I_c$ = 0, the magnetic flux diverter function performed by the rotor core and rotor winding 34 is unsaturated and, as described above, a large portion of magnetic flux produced by PMs 37 as depicted by flux lines 38a traverses the air gap 12 and penetrates to stator assembly 20 (not shown). The unsaturated rotor core 32 is a good conductor for magnetic flux (high magnetic permeability). A large portion of the PM flux as depicted by flux lines 38a is linked with the stator windings 24 located in the slots of the outer stator assembly 20. Conversely, as depicted in FIG. 6B, when the control current $I_c$ > 0 applied to the rotor winding 34 the magnetic flux diverter function in the of the rotor assembly 30 becomes saturated and exhibits high reluctance for the magnetic flux. Under these conditions, a smaller portion of magnetic flux as depicted by flux lines 38b, traverses the air gap 12 to the stator assembly 20. A saturated magnetic flux diverter has low magnetic permeability and exhibits high reluctance for the magnetic flux. Therefore, it can be seen that by varying the control current $I_c$, the magnetic flux linked with the stator coils 24 can be regulated. More magnetic flux linked with the stator windings 24 of the outer stator assembly 20 means that higher electromotive force (EMF) is induced in the stator windings 24. Greater control of the induced EMF directly facilitates greater control of the PM machine 100. This effect can be both utilized in application of the electrodynamic machine 1 as a variable speed generator and for flux weakening control as an electric motor.

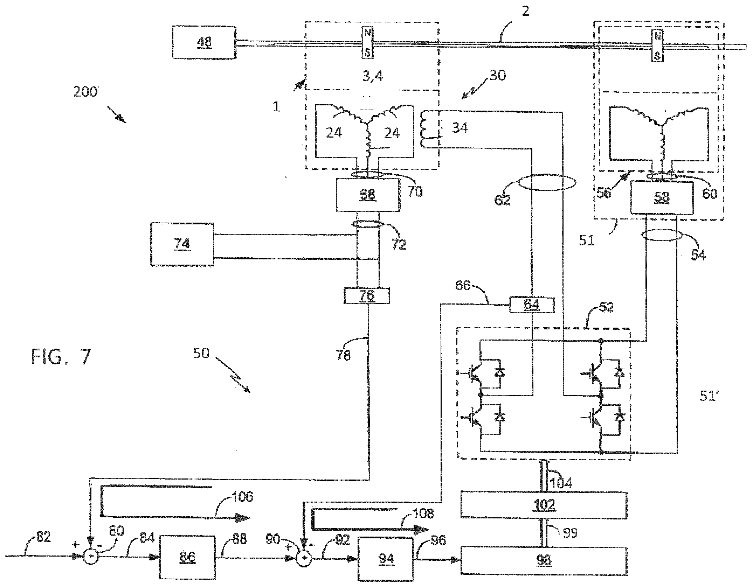

FIG. 7 is a high-level schematic representation of an electrical power generating system 200 according to a possible embodiment. While in an embodiment the description of the systems and applications for the dynamoelectric machine 100 are made with respect to a power generation system, it should be appreciated that other configurations and systems employing the dynamoelectric machine 100 are possible and within the scope of the claims including, for example motor systems, motor control system and the like. In an embodiment the electrical power generating system may include a prime mover 48, such as an aeronautical gas turbine engine, and the PM dynamoelectric machine 100 with magnetically saturable ferromagnetic second stator 30 as described herein such as the PM dynamoelectric machine 100 as shown in FIGs. 2-6. In operation, the prime mover 48 drives the machine 100, by way of a drive shaft 10. An auxiliary power source 51 supplies power to a control current regulator 52 by way of an auxiliary power bus 54.

The auxiliary power source 51 may be AC or DC. It may include a multiphase AC auxiliary PM dynamoelectric machine driven by the drive shaft 2 and a multiphase AC rectifier 58 that receives multiphase AC power from the auxiliary machine 56 on a multiphase AC auxiliary power bus 60 and converts it to DC power on the auxiliary power bus 54. Alternatively, the auxiliary power source 51 may be a separately powered source or a battery with chopper shown as 51'. The auxiliary machine 56 may be any conventional dynamoelectric machine operable to generate power and power the auxiliary bus 54.

The system may include a controller shown generally as 50 that may include the system sensing and control functions. In an embodiment the controller is operably connected to various sensors, such as speed and current sensors as well as provides outputs to control the system such as controllers for the current in the rotor winding 34. A control current regulator 52 preferably comprises an H-bridge circuit. The regulator 52 supplies control current $I_c$ to control coil(s) i.e., rotor winding 34 in the machine 100 by way of a control current supply bus 62. A control current sensor 64 monitors the level of control current passing through the control current supply bus 62 and generates a corresponding control current feedback signal representative of its level on a control current feedback signal line 66.

In an embodiment, a multiphase AC main power rectifier 68 receives multiphase AC power from the stator windings 24 of the machine 1 on a multiphase AC main power bus 70. In an embodiment, the AC power is converted to DC main power on a DC main power bus 72 for supply to a DC load 74. In an embodiment, a sensor detects an operating characteristic of the dynamoelectric machine 1, for example, output voltage, output current, frequency and the like. Likewise, in a motor application, operating characteristics such as motor speed, torque and the like may be measured. One or more main power voltage sensor(s) 76 monitor the level of voltage on the AC bus 72 and/or DC main power bus 72 and generates a corresponding voltage feedback signal (DC shown) representative of its level on a main power voltage feedback signal line 78. The AC power can also be converted to the DC power and then again inverted to the AC power of different frequency and different voltage level.

A voltage signal comparator 80 receives a main power voltage reference signal on a voltage reference line 82 and compares it to the main power voltage feedback signal on the main power voltage signal line 78 to generate a voltage difference signal representative of the difference between them on a voltage difference signal line 84. A main power voltage feedback proportional-plus-integral (PI) controller 86 receives the voltage difference signal on the voltage difference signal line 84 and converts it to a stable control current reference signal on a control current reference signal line 88.

A current signal comparator 90 compares the control current reference signal on the control current reference signal line 88 with the control current feedback signal on the control current feedback signal line 66 to generate a current difference signal on a current difference signal line 92. A control current feedback PI controller 94 receives the current difference signal on the current difference signal line 92 and converts it to a stable control current regulating signal on a control current regulating signal line 96.

A pulse width modulator (PWM) circuit 98 receives the control current regulating signal on a control current regulating signal line 96 and generates corresponding PWM control signals on a PWM control signal bus 99. A gate drive circuit 102 receives the PWM control signals on a PWM control signal bus 99 and generates corresponding gate drive signals on a gate drive signal bus 104.

The control current regulator 52 receives the gate drive signals on the gate drive signal bus 104 to produce a level of the control current $I_c$ on the control current supply bus 62 responsive to a main power voltage feedback loop 106 and a control current feedback loop 108.

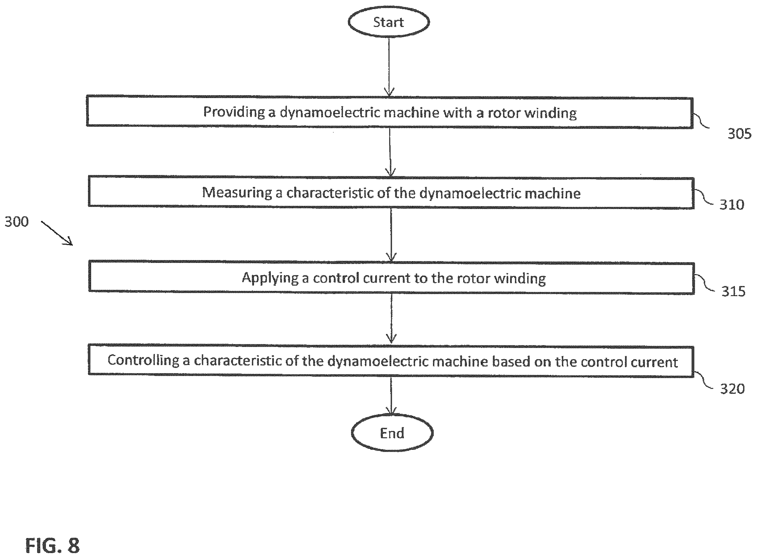

Turing now to FIG. 8, where a flowchart of the method 300 of controlling the flux in a PM dynamoelectric machine 100 is depicted. The method is initiated at process step 305 by providing a dynamoelectric machine 100 with a rotor assembly 30 including a rotor winding 34 in accordance with the embodiments described herein. At process step 310 an operating characteristic, e.g., voltage, current output from a generator or speed, torque and the like for motor applications, of the dynamoelectric machine is measured. Based on the measured operating characteristic the control current $I_c$ in the rotor winding 34 is applied at process step 315 and varied to maintain the operating characteristic at a desired level as depicted at process step 320.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one more other features, integers, steps, operations, element components, and/or groups thereof.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. Many modifications and variations will be apparent to those of ordinary skill in the art without departing from the scope of the invention. The embodiment was chosen and described in order to best explain the principles of the invention and the practical application, and to enable others of ordinary skill in the art to understand the invention for various embodiments with various modifications as are suited to the particular use contemplated.

**Claims**

1. A permanent magnet (PM) dynamoelectric machine (100) with directly controllable PM flux control comprising:

   a drive shaft;
   a first stator assembly (20) comprising a ferromagnetic stator core (21), a plurality of ferromagnetic stator teeth (23) mounted to the stator core (21) with distal ends proximate the inner radial periphery (26) of the stator assembly (20) and a plurality of stator coils mounted between the stator teeth of the plurality of stator teeth; and
   a PM rotor assembly (30) with multiple PMs, a ferromagnetic rotor core (31), a plurality of ferromagnetic rotor teeth (33) mounted to the rotor core (31) with distal ends forming an outer periphery and proximate an inner periphery of the stator assembly separated by an air gap, and at least one control coil, the at least one control coil wrapped about a saturable region of each the rotor teeth (33);
   wherein each saturable region of the rotor teeth is operable to divert air gap magnetic flux ($\Phi_g$) generated by the PMs across the air gap through the distal ends of the rotor teeth (33).

2. The machine of claim 1, wherein application of a control current Ic to the control coil at least partially magnetically saturates the saturable region for the rotor teeth to reduce shunting of air gap magnetic flux $\Phi g$, thereby controlling magnetic flux linkage $\Psi_M$ between the PMs and the plurality of stator coils.

3. The machine of claim 1, wherein application of a control current $I_c$ to the control coil at least partially magnetically saturates the saturable region for the plurality of rotor teeth to reduce shunting of air gap magnetic flux $\Phi g$, thereby at least one of increasing generated electromagnetic force (EMF) and increasing electromagnetic torque Te to desired levels upon application of electrical power to the stator coils at lower levels of rotor assembly angular velocity.

4. The machine of claim 1, further including a rotary transformer having a stationary primary and a rotating secondary, the primary operably coupled to a controller for controlling connection and application of an excitation to the primary of the rotary transformer, the secondary operably connected to the control winding of the rotor.

5. The machine of claim 4, wherein the primary of the rotary transformer is disconnected during motoring operation of the machine.

6. The machine of claim 1, wherein the stator assembly comprises at least one of a laminated ferromagnetic alloy construction and a ferromagnetic stamping.

7. The machine of claim 1, wherein the rotor assembly comprises at least one of a laminated ferromagnetic alloy construction, a sintered magnetic powder construction, a solid steel structure, and a ferromagnetic stamping.

8. The machine of claim 1, wherein the PMs are embedded in the rotor assembly radially distant from the plurality of rotor teeth.

9. The machine of claim 1, wherein the PMs are arranged in a radial direction and magnetized tangentially.

10. The machine of claim 1, wherein the PMs are arranged in a circumferentially and magnetized radially.

11. The machine of claim 1, wherein the control coils connect to each other in series.

12. The machine of claim 1, wherein adjacent windings of the control coils attach to each other to shunt magnetic fluxes from the PMs in opposition.

13. The machine of claim 1, wherein the machine is configured and operable as at least one of a PM generator and a PM motor.

14. A permanent magnet (PM) electric generator system with directly controllable field excitation control comprising:

a prime mover;
a main PM generator coupled to the prime mover comprising;

a first stator assembly comprising a ferromagnetic stator core, a plurality ferromagnetic stator teeth mounted to the stator core with distal ends proximate the inner radial periphery of the stator assembly and a plurality of stator coils mounted between the stator teeth of the plurality of stator teeth,
a PM rotor assembly with multiple PMs, a ferromagnetic rotor core, a plurality of ferromagnetic rotor teeth mounted to the rotor core with distal ends forming an outer periphery proximate an inner periphery of the stator assembly separated by an air gap, and at least one control coil, the at least one control coil wrapped about a saturable region of each the rotor teeth,
wherein each saturable region of the rotor teeth is operable to divert air gap magnetic flux ($\Phi_g$) generated by the PMs across the air gap through the distal ends of the rotor teeth,

a main power rectifier system for converting multiphase alternating current (AC) that the main PM stator coils generate to direct current (DC) main power on a DC power bus that feeds a DC load; and
an auxiliary power source.

15. The system of claim 14, wherein the auxiliary power source comprises a multiphase AC auxiliary PM generator driven by the prime mover and a multiphase AC rectifier that converts AC power generated by the auxiliary PM generator to DC power.

FIG. 1A

FIG. 1B

FIG. 2

EP 3 376 650 A1

FIG. 3

FIG. 4

FIG. 5

FIG. 6B

FIG. 6A

FIG. 7

```
                          ┌─────────┐
                          │  Start  │
                          └─────────┘
                               │
                               ▼
  ┌──────────────────────────────────────────────────────────────────┐
  │       Providing a dynamoelectric machine with a rotor winding      │  305
  └──────────────────────────────────────────────────────────────────┘
                               │
                               ▼
  ┌──────────────────────────────────────────────────────────────────┐
  │        Measuring a characteristic of the dynamoelectric machine    │  310
  └──────────────────────────────────────────────────────────────────┘
                               │
          300                  ▼
  ┌──────────────────────────────────────────────────────────────────┐
  │           Applying a control current to the rotor winding          │  315
  └──────────────────────────────────────────────────────────────────┘
                               │
                               ▼
  ┌──────────────────────────────────────────────────────────────────┐
  │ Controlling a characteristic of the dynamoelectric machine based on the control current │  320
  └──────────────────────────────────────────────────────────────────┘
                               │
                               ▼
                          ┌─────────┐
                          │   End   │
                          └─────────┘
```

FIG. 8

Europäisches
Patentamt

European
Patent Office

Office européen
des brevets

# EUROPEAN SEARCH REPORT

Application Number

EP 18 16 1018

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 814 146 A2 (HAMILTON SUNDSTRAND CORP [US]) 17 December 2014 (2014-12-17) * the whole document * | 1-15 | INV. H02K21/46 H02K21/04 H02P9/40 H02K1/27 |
| X | GB 1 071 113 A (SIEMENS AG) 7 June 1967 (1967-06-07) * the whole document * | 1-3,6-8, 11-15 | |
| X | DE 41 39 843 C1 (MUTTER ALBERT [DE]) 24 June 1993 (1993-06-24) * column 3, lines 3-25; claims 1-12; figures 1-9 * | 1-3,6,7, 9,12-14 | |
| X | EP 3 068 033 A1 (HAMILTON SUNDSTRAND CORP [US]) 14 September 2016 (2016-09-14) * the whole document * | 1-15 | |

TECHNICAL FIELDS SEARCHED (IPC)

H02K
H02P

The present search report has been drawn up for all claims

| Place of search | Date of completion of the search | Examiner |
|---|---|---|
| The Hague | 6 July 2018 | Maître, Jérôme |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 16 1018

This annex lists the patent family members relating to the patent documents cited in the above-mentioned European search report.
The members are as contained in the European Patent Office EDP file on
The European Patent Office is in no way liable for these particulars which are merely given for the purpose of information.

06-07-2018

| Patent document cited in search report | | Publication date | Patent family member(s) | | Publication date |
|---|---|---|---|---|---|
| EP 2814146 | A2 | 17-12-2014 | EP<br>US | 2814146 A2<br>2014368075 A1 | 17-12-2014<br>18-12-2014 |
| GB 1071113 | A | 07-06-1967 | NONE | | |
| DE 4139843 | C1 | 24-06-1993 | NONE | | |
| EP 3068033 | A1 | 14-09-2016 | EP<br>US | 3068033 A1<br>2016268942 A1 | 14-09-2016<br>15-09-2016 |

EPO FORM P0459

For more details about this annex : see Official Journal of the European Patent Office, No. 12/82